# DEMANDE DE BREVET EUROPEEN

(11) **EP 2 829 856 A1**
(43) Date de publication de la demande: **28.01.2015**
(21) Numéro de dépôt: 14178619.4
(22) Date de dépôt: 25.07.2014
(51) Int. Cl.: G01J 3/18, G01J 3/36, G01J 3/02

(54) **Spectromètre imageur à couverture spectrale étendue**

(30) Priorité: 26.07.2013 FR 1357424
(71) Demandeur: CENTRE NATIONAL D'ETUDES SPATIALES, 75001 Paris (FR)
(72) Inventeur: Buil, Christian, 31320 CASTANET-TOLOSAN (FR)
(74) Mandataire: Regimbeau

(57) **Abrégé**

L'invention concerne un spectromètre imageur de type échelle comprenant une fente longue adaptée pour laisser passer un faisceau optique, un ensemble collimateur adapté pour collimater le faisceau optique, un réseau croisé dit réseau auxiliaire et un réseau échelle dit principal configurés pour réaliser un spectre du faisceau optique doublement multiplexé, un ensemble objectif configuré pour former le spectre sur un ensemble de détection dudit spectromètre.

## Description

### DOMAINE TECHNIQUE GENERAL

L'invention concerne le domaine des spectromètres imageur compacts permettant d'accéder à la fois à un haut pouvoir résolvant spectral de hautes performances radiométriques et une large couverture spectrale. L'analyse spectrale étant fondée sur l'usage d'un élément dispersif des diverses longueur d'onde composant le rayonnement optique analysé.

### ETAT DE LA TECHNIQUE

Les spectromètres font partie des solutions disponibles pour le sondage des atmosphères planétaires vues depuis l'espace et en orbite et par exemple, pour mesurer la concentration de CO₂ (ou autres gaz à effet de serre).

Une opération de sondage consiste à relever avec le spectromètre la signature spectrale d'espèces chimiques particulières, pour pouvoir ensuite inverser mathématiquement les données acquises afin d'extraire des informations sur la concentration de ladite espèce chimique ou les paramètres physiques du milieu (température, humidité, etc.).

L'impact des phénomènes géophysique sur le spectre observé est réputé discret et nécessite donc des instruments très performants pour être observé avec succès.

Dans de nombreuses situations, la signature spectrale pertinente de l'espèce chimique analysée est très localisée dans le spectre électromagnétique.

L'instrument peut donc se contenter d'observer dans des fenêtres spectrales relativement étroites.

Ce relâchement d'exigence (observation dans des domaines spectraux restreints et non nécessairement continus) offre l'opportunité d'optimiser les autres paramètres essentiels que sont le pouvoir de résolution spectral et le pouvoir de résolution radiométrique.

Malgré tout, il est très souvent utile, pour améliorer la qualité du processus d'inversion, d'observer l'espèce chimique simultanément dans plusieurs fenêtres spectrales, voir même d'autres espèces chimiques dans autant de fenêtres spectrales discrètes comme éléments d'étalonnage.

On notera que les contraintes particulières de l'instrumentation spatiale (volume et masse restreints en particulier) et les performances instrumentales nécessaires imposent par ailleurs de concevoir des instruments alliant à la fois la compacité et la performance.

Pour répondre à ce type d'applications, différentes solutions de spectromètre ont été proposées.

On connait deux familles d'instruments : l'une utilisant des interféromètres à Transformée de Fourier (en anglais, « *Fourier Transform Spectrometer* », (FTS)), l'autre des spectromètres à éléments dispersifs.

La première famille (les FTS) conduit à des instruments complexes du fait de la présence presque systématique d'éléments en mouvement permanent et du fait des exigences de stabilité propres aux techniques interférométriques. A l'exception de certaines configurations statiques, ce type d'instrument est peu adapté à l'observation de bandes spectrales discrètes et conduit souvent à une architecture coûteuse en termes de masse, de volume et de consommation énergétique.

La seconde famille repose sur le principe de la dispersion angulaire des diverses longueurs d'ondes constituant la lumière analysé. Pour des raisons d'efficacités (pouvoir de dispersion et étendue géométrique) l'élément dispersif privilégié est constitué d'un réseau à diffraction.

La solution « traditionnelle » (ou « conventionnelle ») consiste à utiliser un réseau à diffraction travaillant au premier ordre d'interférence dans un faisceau collimaté. Le dispositif comporte alors dans l'ordre du trajet de la lumière, un système imageur qui forme une image de la scène analysée spectralement sur une fente longue d'entrée, un ensemble collimateur, le réseau, un objectif, puis enfin, un détecteur, généralement à deux dimensions chargé d'enregistrer le spectre.

L'inconvénient de cette solution est que le domaine spectral exploré dépend très directement de la taille du détecteur suivant l'un de ces axes pour une résolution spectrale donnée.

L'observation d'une couverture spectrale large ou d'un ensemble de fenêtres spectrales étroites mais disjointes spectralement les unes des autres impose l'usage d'un détecteur de grande taille suivant l'un de ces côtés.

Les limites technologiques font que le domaine spectral couvert permet d'atteindre difficilement les performances escomptées en matière de sondage atmosphérique.

Il est par ailleurs supposé que l'instrument est entièrement statique (pas d'accès à la rotation du réseau par exemple, un moyen classique mais qui empêche une observation simultanée de tout le domaine spectral souhaité, ce qui est rédhibitoire dans le domaine spatial).

Le montage spectrographique traditionnel peut cependant être exploité si l'on concède d'utiliser un spectromètre distinct par bande spectrale. Techniquement, ces spectromètres, qui travaillent en parallèles, sont optimisés pour chacune des bandes.

C'est la solution adoptée dans l'instrument de la mission de la NASA « *Orbiting Carbon Observatory* » (OCO) où trois spectromètres jumeaux, mais optimisés dans les détails, sont exploités pour étudier trois bandes spectrales.

Toutefois, un tel instrument est imposant : un volume de 1,6mx0,4 mx0,6m, une masse de 135 kg et une puissance opérationnelle de 125 watts.

### PRESENTATION DE L'INVENTION

L'invention concerne un spectromètre permettant d'observer plusieurs bandes spectrales dans un large domaine de longueurs d'onde sans les inconvénients précités.

A cet effet, l'invention propose un spectromètre imageur de type échelle comprenant une fente longue adaptée pour laisser passer un faisceau optique, un ensemble collimateur adapté pour collimater le faisceau optique, un réseau croisé dit réseau auxiliaire et un réseau échelle dit principal configurés pour réaliser un spectre du faisceau optique doublement multiplexé, un ensemble objectif configuré pour former le spectre sur un ensemble de détection dudit spectromètre.

L'invention est avantageusement complétée par les caractéristiques suivantes, prises seules ou en une quelconque de leur combinaison techniquement possible :
- le réseau croisé dit auxiliaire comprend une pluralité de traits de gravures orientés perpendiculairement aux traits de gravures dudit réseau échelle dit principal ;
- le réseau est configuré pour disperser le faisceau optique dans des ordres de diffractions supérieurs à l'unité ;
- l'ensemble de détection comprend une pluralité de filtres spectraux disposés devant un détecteur, l'ensemble de détection étant configuré pour séparer spectralement les ordres du réseau auxiliaire de manière à démultiplexer lesdits ordres ;
- l'ensemble de détection comprend un dispositif à miroir disposé devant une pluralité de détecteurs, ledit dispositif à miroir étant configuré pour séparer physiquement le faisceau optique et envoyer le faisceau ainsi séparé vers chacun des détecteurs de ladite pluralité de détecteurs, l'ensemble de détection étant configuré pour séparer spectralement les ordres du réseau auxiliaire de manière à démultiplexer lesdits ordres ;
- l'ensemble de détection comprend au moins une lame dichroïque disposé devant une pluralité de détecteurs, la lame dichroïque étant configurée pour séparer physiquement le faisceau optique et envoyer le faisceau ainsi séparé vers chacun des détecteurs de ladite pluralité de détecteurs, l'ensemble de détection étant configuré pour séparer spectralement les ordres du réseau auxiliaire de manière à démultiplexer lesdits ordres ;
- le réseau auxiliaire est un réseau à transmission ou un réseau à réflexion adapté pour être utilisé en simple ou double passage ;
- le spectromètre est constitué d'élément optiques à miroirs, dioptriques ou catoptriques ;
- il comprend en outre un télescope d'entrée par exemple Cassegrain adapté pour transmettre le faisceau optique vers la fente, la fente étant disposé au plan focal du télescope ;
- le réseau principal échelle est immergé dans un substrat d'indice de réfraction différent de l'indice de réfraction du verre/air.

Le spectromètre de l'invention exploite le principe connu des spectromètres dits « échelles ». Ce réseau échelle diffracte un ensemble de n ordres dans une direction voisine, qui peuvent être exploités.

Le spectromètre imageur de l'invention peut couvrir les domaines spectraux d'observation ultraviolette, visible et infrarouge.

En outre, le spectromètre de l'invention se distingue de ceux de l'état de la technique par un étage supplémentaire de multiplexage spectral. Ce multiplexage supplémentaire d'ordre n' vient du fait que le réseau dispersif auxiliaire est exploité à des ordres de diffraction pouvant être supérieur à l'unité. Ce faisant le spectromètre réalise un double multiplexage spectral, celui traditionnel du spectromètre échelle, et celui ici ajouté, provenant d'un second réseau à diffraction.

L'invention permet d'avoir des spectromètres très compacts, couvrant un large domaine spectral tout limitant le nombre de détecteurs nécessaires.

### PRESENTATION DES FIGURES

D'autres caractéristiques et avantages de l'invention ressortiront encore de la description qui suit laquelle est purement illustrative et non limitative et doit être lue en regard des dessins annexés sur lesquels
- la figure 1 illustre un spectromètre selon un premier mode de réalisation de l'invention.
- les figures 2a et 2b illustrent respectivement un spectromètre selon un second et troisième modes de réalisation de l'invention ;
- la figure 3 illustre un premier niveau de multiplexage réalisé par un réseau échelle du spectromètre selon l'invention ;
- la figure 4 illustre le second niveau de multiplexage superposé au premier niveau de multiplexage réalisé par un réseau croisé du spectromètre selon l'invention ;
- les figures 5a, 5b et 5c illustrent trois arrangements possibles d'un ensemble de détection d'un spectromètre selon l'invention.

Sur l'ensemble des figures, les éléments identiques portent des références identiques.

### DESCRIPTION DETAILLEE DE L'INVENTION

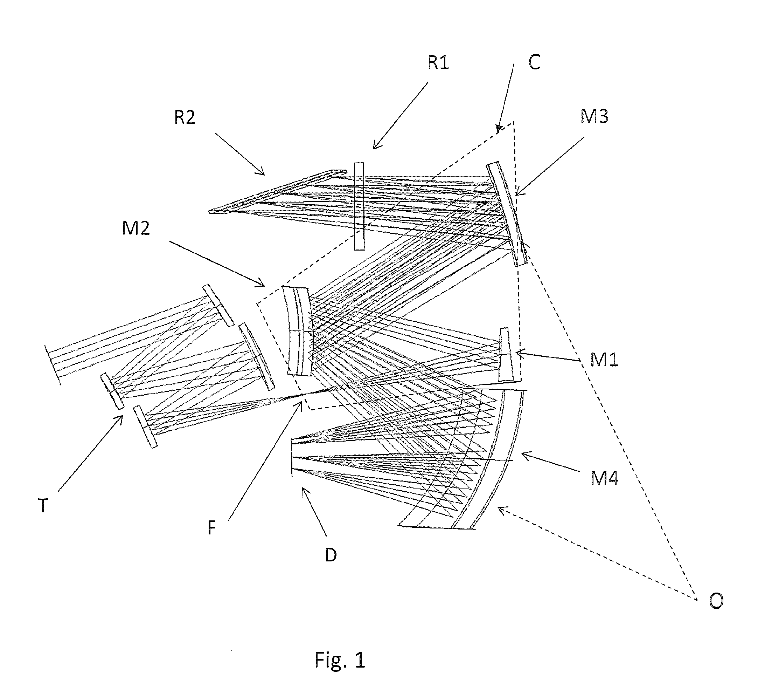

La figure 1 illustre un spectromètre selon un mode de réalisation préféré de l'invention.

Selon ce mode de réalisation, un faisceau optique est collecté par un télescope T et est focalisé par ce dernier sur une fente longue d'entrée F.

On précise ici que l'on entend par fente longue, une fente qui permet d'observer un grand champ d'observation ce que l'homme du métier comprend comme étant opposé à un trou circulaire qui peut correspondre à l'extrémité d'une fibre optique (principe exploité en astronomie pour étudier le spectre des étoiles ou dans certains instruments de contrôles industriels). Une telle fente longue contribue aux performances spectromètre.

Ensuite, le faisceau optique rencontre un ensemble C collimateur comprenant ici trois miroirs M1, M2, M3.

L'ensemble collimateur tel qu'illustré sur la figure 1 se comporte à la manière d'un dispositif connu TMA (en anglais, « *Tri-Mirror Astigmat* »). Un tel ensemble de miroirs a les caractéristiques d'un dispositif grand champ et est achromatique.

Le faisceau optique collimaté passe ensuite au travers d'un réseau à transmission R1, dit croisé (ou auxiliaire). Ce réseau croisé R1 est faiblement dispersif et travaille à des ordres n'de diffraction égal et supérieur à 1, par exemple n' = 1 et n' = 2.

Une utilisation du réseau à transmission R1 à des ordres supérieur à l'unité réalise un multiplexage spectral d'ordre *n*'.

Le réseau auxiliaire R1 est un réseau gravé classique exploité dans les ordres proches de l'unité (n'=1 à n'=3 typiquement pour une utilisation pratique). Puisque ce réseau doit être peu dispersif, sa densité de gravure est faible, typiquement de 100 traits au millimètre ou moins.

Tel que représenté sur la figure 1, le réseau auxiliaire R1 est un réseau gravé à transmission, tel que connu. Dans la disposition illustrée sur cette figure, le faisceau optique traverse deux fois le réseau auxiliaire R1 et est donc dispersée deux fois, une caractéristique qui ne modifie que les paramètres dimensionnels de ce réseau, mais en aucunement le principe du double multiplexage.

De manière alternative, le réseau auxiliaire R1 peut être gravé à même la surface d'un des miroirs de l'ensemble collimateur C, par exemple le miroir M3 disposé juste avant le réseau auxiliaire R1 tel que représenté sur la figure 1. Dans ce cas, ce miroir M3 est à la fois un miroir imageur et à la fois un élément dispersif par réflexion, qui peut remplacer le réseau auxiliaire R1.

Après avoir traversé le réseau croisé R1, le faisceau optique rencontre un réseau échelle R2 de type classique.

De manière avantageuse, la gravure se présente comme un ensemble de traits fins parallèles et équidistants entre eux.

De manière connue, un réseau échelle est utilisé sous une forte incidence et diffracte dans une direction commune le faisceau optique de nombreux ordres de diffraction n (typiquement 10 < n < 100).

C'est ce réseau échelle R2 qui est à l'origine de la dispersion proprement dite du spectre du faisceau optique d'entrée. Le réseau échelle R2 réalise ici un autre multiplexage d'ordre n.

Le faisceau optique issu du réseau échelle R2 est en conséquence un faisceau optique dont le spectre est doublement multiplexé.

Le premier multiplexage consiste à diffracter le flux optique analysé dans plusieurs ordres de diffraction qui se recouvrent suivant la même direction angulaire.

C'est le rôle classique et connu par l'état de l'art de l'élément du réseau échelle dit principal R2. Le réseau croisé R1, réalise une faible dispersion spectrale perpendiculaire à celle du réseau principal, suffisante pour séparer spatialement l'image des ordres du réseau échelle dans le plan du détecteur.

Un réseau échelle R2 est un cas particulier d'un réseau de diffraction et est tel que connu en soi, un réseau à diffraction comprenant une fine structure périodique éclairée par le front d'onde du faisceau optique à analyser.

De manière connue, cette structure répétitive est imprimée à la surface d'une résine déposée sur un substrat en verre à partir d'un moule maître gravé mécaniquement par des machines très précises. Le processus de fabrication de ces réseaux est complété par le dépôt d'une fine couche réfléchissante à la surface de la résine si le réseau est destiné à travailler en réflexion. Ces réseaux ainsi produits sont dits « gravés » et présentent de bonnes performances radiométriques.

Le réseau échelle R2 est avantageusement utilisé en mode quasi-Littrow et éclairé selon un fort angle de Blaze permettant - contrairement au réseau « traditionnel » - d'exploiter de nombreux ordres de diffraction dans la même direction de diffraction avec une énergie diffractée dans chacun d'eux potentiellement élevée.

De manière alternative ou complémentaire, le réseau échelle R2 peut être à immersion. Un réseau dit à immersion est tel qu'il est noyé dans un substrat d'indice de réfraction N. Avec un réseau à immersion le phénomène d'interférences multiples produites par la structure périodique du réseau a lieu dans un milieu d'indice de réfraction N. Suivant l'usage qui est fait de cette condition à taille identique de l'instrument, le pouvoir de résolution peut être multiplié par N où un pouvoir de résolution identique, la taille de l'instrument peut être réduite d'un facteur n typiquement.

La figure 1 illustre une mise en place compacte du dispositif à double multiplexage qui est caractérisée par un double passage par la plupart des éléments optiques qui le compose. Selon cette configuration, le domaine transmis peut être très large, pouvant aller de l'ultraviolet à l'infrarouge thermique. En outre une telle configuration est très compacte et permet d'obtenir un pouvoir de résolution typique de R=25000 (ou supérieur en modifiant les paramètres du réseau - pas de gravure et angle de blaze) dans 3 à 6 bandes spectrales distinctes couvrant les domaines NIR et SWIR.

D'autres dispositions sont possibles, en simple passage et qui peuvent exploiter pleinement le principe du double multiplexage.

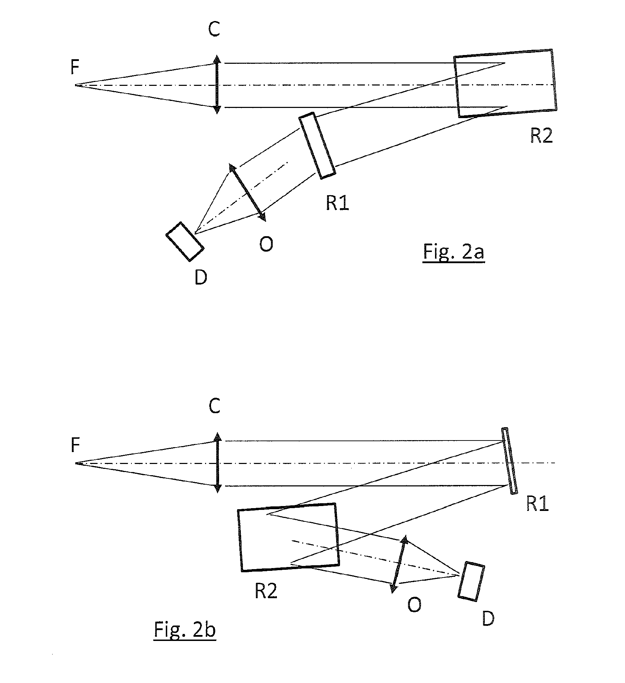

Les **figures 2a** et **2b** illustrent deux variantes, qui se distinguent ici par le fait que le réseau auxiliaire croisée R1 est soit placé après le réseau échelle (figure 2a) et avant (figure 2b). Dans tous les cas, le réseau auxiliaire R1 peut être du type à réflexion ou à transmission.

La fente d'entrée F1 du spectromètre est en F. Le collimateur est en C. L'objectif qui forme une image nette du spectre sur le détecteur est en O. L'ensemble de détection est en D.

De manière avantageuse, le réseau croisé R1 et le réseau échelle R2 comprennent des traits de gravures qui sont perpendiculaires l'un par rapport à l'autre.

Dans l'arrangement de la figure 1, le faisceau issu du réseau échelle R2 repasse alors par le réseau croisé R1 (principe du double passage) puis par un ensemble de trois miroirs M3, M2, M4 dont deux sont de préférence commun à l'ensemble collimateur M1 M2, M3.

Cet ensemble de trois miroirs M3, M2, M4 constitue un ensemble objectif O du spectromètre.

Cet ensemble objectif O, permet de focaliser le faisceau optique sur un ensemble de détection D.

L'ensemble de détection D permet de dé-multiplexer les différents ordres du spectre du faisceau doublement multiplexés, les ordres n, n'.

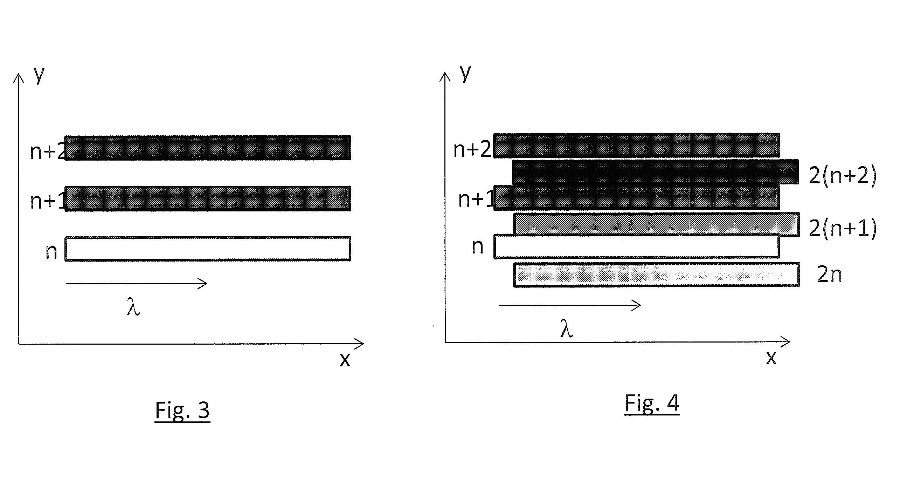

On a illustré sur la **figure 3** les ordres du réseau échelle numérotés par la variable n. Typiquement n peut être compris en 10 et 100.

Sur la figure 3 seuls trois ordres de diffraction sont représentés pour une raison de clarté, numérotés n, n+1 et n+2. L'axe X du détecteur est l'axe de dispersion principal du spectre (axe des longueurs d'onde λ). L'axe Y du détecteur est l'axe de séparation des ordres grâce à la dispersion induite par le disperseur auxiliaire croisé.

Les ordres sont alors séparés les uns des autres physiquement et exploitables sans que l'information qu'ils contiennent ne se mélange. Cette figure illustre l'usage normal d'un réseau échelle à disperseur croisé.

Le second niveau de multiplexage exploite le fait que le réseau auxiliaire (désigné comme croisé précédemment) est lui-même utilisé dans des ordres de diffraction égaux et supérieur à l'unité. Si n' désigne le rang des ordres de diffraction du réseau auxiliaire, si par exemple les ordres n'=1 et n'=2 sont exploités, à la longueur d'onde λ associé à l'ordre n'=1 se superpose une information supplémentaire correspondant à la longueur d'onde λ/2 associé à l'ordre n'=2.

On a illustré sur la **figure 4** les ordres du réseau échelle principal R1 superposés aux ordres du réseau croisé auxiliaire R2.

La figure 4 est proche de la figure 3 à ceci près qu'on exploitation à présent à la fois l'ordre n'=1 et l'ordre n'=2 du réseau croisé R2. Sur cette figure 4, deux familles d'ordres se chevauchent. La première famille est composée des ordres du réseau échelle principal R1 n, n+1, n+2. La seconde famille comporte les ordres 2 x n, 2x (n+1), 2 x (n+2) de ce même réseau R1.

Ce recouvrement d'ordre n'=1 et n'=2 permet d'amener en superposition des ordres n du réseau principal séparés par de grandes valeurs, ce qui accroit la couverture spectrale de l'instrument, chose impossible en utilisant le réseau croisé à l'ordre n'=1 seulement, comme dans l'état de l'art actuel.

Au niveau de l'ensemble de détection D, les ordres n et n'sont dé-multiplexés par séparation spectrale ou géométriques des différents ordres du réseau croisé (R1) avant le détecteur, en particulier par une séparation dichroïque. Cette séparation des ordres n et n' se fait soit :
(1) Par leur position sur un détecteur commun, les ordres sont alors distingués par un système de filtres d'ordres disposés proches de la surface sensible.
(2) Par leur arrivée sur deux au moins détecteurs distincts recevant les ordres d'intérêt suffisamment écartés les uns des autres.
(3) Par l'ajout d'une ou plusieurs lames dichroïques qui séparent spectralement les familles d'ordres n'pour les envoyer vers des détecteurs distincts.

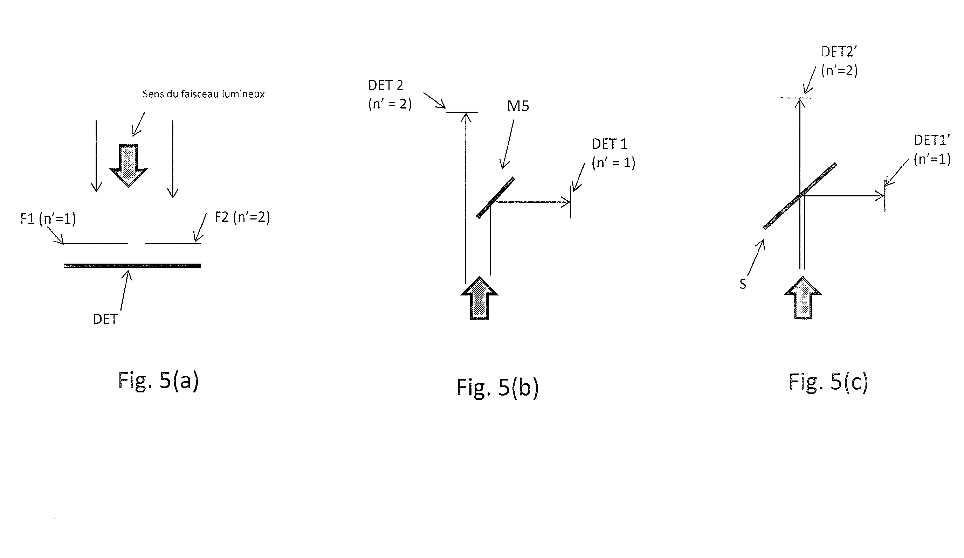

On a illustré sur les **figures 5a, 5b** et **5c** trois arrangements possibles pour l'ensemble de détection D.

Selon un premier arrangement illustré sur la figure 5a, l'ensemble de détection D comporte un seul détecteur DET de type matriciel, avec au voisinage de sa surface, la présence de filtres spectraux passe-bande Filtre 1, Filtre 2 dont la largeur spectrale permet d'isoler les ordres n' du réseau auxiliaire R1. Sur cette figure 5a, les deux filtres F1, F2 séparent l'aire disponible du détecteur DET en deux zones. L'une des zones permet de détecter la partie du spectre associés à l'ordre n'=1, l'autre zone permet de détecter la partir du spectre associée à l'ordre n'=2. Les paramètres des réseaux principal et auxiliaire (densités de gravure et angles d'incidences) sont calculés de manière à ce que les parties du spectre d'intérêt arrivent dans les zones précitées.

Selon un second arrangement illustré sur la figure 5b, l'ensemble de détection D comporte deux détecteurs DET 1, DET 2. Un dispositif à miroir M5 permet de séparer physiquement les rayons provenant des deux familles d'ordre n'=1 et n'=2 vers des détecteurs distincts DET 1, DET 2. Cette configuration évite l'usage de filtres optiques passe-bande et minimise donc le nombre de surfaces optiques.

Selon un troisième arrangement illustré sur la figure 5c, l'ensemble de détection D comporte deux détecteurs DET1', DET2' avec une séparation des ordres n'=1 et n'=2 par la mise en oeuvre d'une lame séparatrice spectrale dichroïque S.

On notera que c'est ce troisième arrangement qui permet d'exploiter au mieux le principe du double multiplexage et qui offre le plus souplesse quant au point de fonctionnement du spectromètre imageur. En effet les partie des ordres n' qui se chevauchent angulairement peuvent à présent être exploitées.

## Revendications

1. Spectromètre imageur de type échelle comprenant une fente longue (F) adaptée pour laisser passer un faisceau optique, un ensemble collimateur (C) adapté pour collimater le faisceau optique, un réseau croisé dit réseau auxiliaire (R1) et un réseau échelle dit principal (R2) configurés pour réaliser un spectre du faisceau optique doublement multiplexé, un ensemble objectif (O) configuré pour former le spectre sur un ensemble de détection (D) dudit spectromètre, le réseau croisé dit auxiliaire (R1) comprenant une pluralité de traits de gravures orientés perpendiculairement aux traits de gravures dudit réseau échelle dit principal (R2), le réseau (R1) étant configuré pour disperser le faisceau optique dans des ordres de diffractions supérieurs à l'unité, l'ensemble de détection (D) étant configuré pour dé-multiplexer les différents ordres du spectre du faisceau doublement multiplexés en séparant les différents ordres du réseau croisé.

2. Spectromètre imageur selon la revendication 1, dans lequel l'ensemble de détection (D) comprend une pluralité de filtres spectraux (F1, F2) disposés devant un détecteur (DET), l'ensemble de détection (D) étant configuré pour séparer spectralement les ordres du réseau auxiliaire (R1) de manière à démultiplexer lesdits ordres.

3. Spectromètre imageur selon la revendication 1, dans lequel l'ensemble de détection (D) comprend un dispositif à miroir (M5) disposé devant une pluralité de détecteurs (DET1, DET2), ledit dispositif à miroir (M5) étant configuré pour séparer physiquement le faisceau optique et envoyer le faisceau ainsi séparé vers chacun des détecteurs (DET1, DET2) de ladite pluralité de détecteurs (DET1, DET2), l'ensemble de détection (D) étant configuré pour séparer spectralement les ordres du réseau auxiliaire (R1) de manière à démultiplexer lesdits ordres.

4. Spectromètre imageur selon la revendication 1, dans lequel l'ensemble de détection (D) comprend au moins une lame dichroïque (S) disposé devant une pluralité de détecteurs (DET1', DET2'), la lame dichroïque étant configurée pour séparer physiquement le faisceau optique et envoyer le faisceau ainsi séparé vers chacun des détecteurs (DET1', DET2') de ladite pluralité de détecteurs (DET1', DET2'), l'ensemble de détection (D) étant configuré pour séparer spectralement les ordres du réseau auxiliaire (R1) de manière à démultiplexer lesdits ordres.

5. Spectromètre imageur selon l'une des revendications précédentes, dans lequel le réseau auxiliaire (R1) est un réseau à transmission ou un réseau à réflexion adapté pour être utilisé en simple ou double passage.

6. Spectromètre imageur selon l'une des revendications précédentes dans lequel le spectromètre est constitué d'élément optiques à miroirs, dioptriques ou catoptriques.

7. Spectromètre imageur selon l'une des revendications précédentes comprenant en outre un télescope (T) d'entrée par exemple Cassegrain adapté pour transmettre le faisceau optique vers la fente (F), la fente étant disposé au plan focal du télescope (F).

8. Spectromètre imageur selon l'une des revendications précédentes dans lequel le réseau principal (R2) échelle est immergé dans un substrat d'indice de réfraction différent de l'indice de réfraction du verre/air.
